# EUROPEAN PATENT SPECIFICATION

(11) **EP 3 891 057 B1**
(45) Date of publication and mention of the grant of the patent: **01.11.2023**
(21) Application number: 19817432.8
(22) Date of filing: 26.11.2019
(51) Int. Cl.: B62K 5/027, B62D 9/02

(54) **SELF-BALANCING TILTING VEHICLE WITH TILTING LOCK**
SELBSTAUSGLEICHENDES KIPPFAHRZEUG MIT KIPPVERRIEGELUNG
VÉHICULE INCLINABLE À AUTO-ÉQUILIBRAGE AVEC VERROU BASCULANT

(30) Priority: 03.12.2018 NL 2022122
(43) Date of publication of application: 13.10.2021
(73) Proprietor: Carver B.V., 3295 KV 's-Gravendeel (NL)
(72) Inventor: VAN DEN BRINK, Christopher Ralph, 3295 KV 's-Gravendeel (NL)
(74) Representative: Nederlandsch Octrooibureau
(86) International application number: PCT/NL2019/050783
(87) International publication number: WO 2020/117045

(56) References cited:
- WO-A1-95/34459
- WO-A1-02/068228
- WO-A1-2011/121211
- WO-A2-2014/022315
- US-A1- 2018 222 526

## Description

### Field of the invention

The present invention relates to a self-balancing tilting vehicle comprising a rear frame section having two drive wheels and a front frame section having at least one front wheel, connected to the rear frame section such as to be tiltable about a tilt axis that extends in a length direction, the front frame section carrying a driver seat, the rear frame section comprising a propulsion drive for rotating the drive wheels and a tilting drive for tilting the front section about the tilting axis, the front wheel being tiltable about a steering axis that extends transversely to the tilt axis.

### Background art

Such a self-balancing tilting vehicle is known from WO95/34459, describing a vehicle in which the front wheel can freely pivot about a generally vertical front suspension axis. The steering wheel that is operated by the driver, is controlling two hydraulic cylinders that pivot the front frame section in which the driver is seated, about the longitudinal tilt axis. A sensor on the front wheel measures the force or torque that acts on the front wheel and interrupts the action of the tilting cylinders when this force or torque is below a pre-determined threshold value, for instance zero. If, at a certain speed, the driver turns the steering wheel to the right, this actuates the tilting cylinders and the front frame section will start to tilt away from the vertically upright position, to the right. The front wheel, that is freely suspended, experiences a torque and will start to tilt to about the front fork axis, causing the vehicle to move into a right curve. When the torque on the front wheel returns to zero, the tilting is interrupted, and the tilting position of the front frame part will be maintained at the right angle, that matches with the velocity, the radius of the curve driven and the weight of the front frame part, including the driver.
In WO99/14099 a self-balancing tilting vehicle having a rotation sensor coupled to the front wheel is described. The rotation sensor measures the difference in rotation between the front wheel about its front fork axis and the rotation input obtained from the driver by turning the steering wheel and operates the tilting cylinders on the basis of this difference signal. This results in improved handling and ease of driving.
In WO99/24308 a self/balancing tilting vehicle comprising an opposite lock power cylinder attached to the front steering wheel, so that the tilting section will easily fall into the bend, when the steering wheel is turned by the driver.
Tilting vehicles as described in WO99/14099 and WO99/24308 are driven by a combustion engine and involve a relatively heavy hydraulic tilting mechanism.
A free tilting motion of the vehicle could, however, be undesirable when the vehicle is parked and left unattended, as someone leaning against the vehicle could easily "tip it". Furthermore, when passengers getting in or out of the vehicle, any tilting motions of the vehicle could result in the aforementioned actions becoming more difficult.
US patent application US2018/0222526 describes a trike vehicle with selectively pivotable operator cabin, in which a front chassis portion is enabled to tilt relative to a rear chassis portion by virtue of conjoined couplings and the front wheel.

### Summary of the invention

It is an object of the present invention to provide a self-balancing tilting vehicle in which a controlled tilting of the front frame section is provided under all operational conditions.

It is in particular an object of the present invention to provide a self-balancing tilting vehicle which can be safely operated at a low or zero speed.

It is a further object of the present invention to provide a self-balancing tilting vehicle which is light-weight, and of a compact construction. It is a further object of the invention to provide a self-balancing tilting vehicle that is suitable to be utilized in conjunction with an electric drive, which is reliable, and which requires little maintenance.
Hereto the vehicle according to the invention is characterized in that the vehicle further comprises a locking mechanism for locking the front frame section in a non-tiltable position to the rear frame section, and a controller being with an input arranged for receiving a lock-command signal and being with an output connected to the locking mechanism for generating a locking signal for actuating the locking mechanism, wherein the lock-command signal comprises a user-generated signal and/or a status signal provided by a sensor and further comprises an electric motor situated at a predetermined distance from the tilt axis with a gear, and a tilting member having a toothed surface engaging with the gear such that the tilting member can be displaced transversely to the tilting axis by rotation of the gear, whereby the tilting drive and the tilting member are connected to the respective front and rear frame sections, and wherein the locking element is comprised in the tilting drive.

The electric tilting drive acting via a toothed gear on the toothed surface of the drive member, provides a reduced-weight tilting mechanism that can rapidly and reliably tilt the front frame section into the required position. The tilting member may remain stationary with respect to the front frame section, as the drive member moves along the toothed surface to tilt the front frame section with respect to the rear frame section. Through the use of the toothed surface in combination with the engaging drive member, the motion along the surface is accurately controllable.

The electric drive delivers a torque in response to an exerted force on the steering member and/or rotation of the front wheel about its front fork axis, tilting the front frame of the vehicle. The relatively light weight electric motor can provide a large tilting moment by placing this motor at a predetermined distance from the tilt axis to obtain a large tilt moment. As the tilting forces that are required, especially for speeds suitable for city traffic, i.e. below 50 km/h, are more or less constant and relatively low, a light-weight electric motor can operate in conjunction with the toothed tilting member to achieve a reliable tilting operation. As a result, the titling vehicle may be of a more light-weight and compact construction compared to known tilting vehicles. The tilting member and tilting drive assembly may comprise a rack and pinion drive, which can be easily installed, inspected, disassembled and maintained and adjusted to be in play free operational state and provides for safe and reliable tilting..

When a locking signal is generated by the controller, based on a driver command or sensor status signal, the locking mechanism is activated, locking the front frame section to the rear frame section. The driver command may comprise the use of a remote key or activating a parking and/or ignition switch. The status signal may for instance be a minimum speed or idle time of the vehicle. By activation of the locking mechanism the tilting of the front frame section is effectively prevented. By the activation of the locking mechanism, tilting of the frame is thus no longer possible, allowing the vehicle to be in a rigid and safe position such that, for example while being parked, the vehicle can be safely (un-)loaded and left unattended.

Although the vehicle is described as comprising a driver seat, it will be clear that the invention extends both to driver driven and self-driving vehicles. Thus, the term driver seat also implies a driver in a self-driving vehicle, i.e. more a "passenger" of the vehicle.

According to an aspect of the invention, the front frame section comprises at least one door for allowing access to the driver seat and a door-closed sensor for registering if a door is open, wherein the controller has an input connected to said door-closed sensor and is adapted for generating the locking signal when the door-closed sensor registers an open-door. Thus, as soon as a door of the tilting vehicle is opened, the tilting of the vehicle is locked, allowing safe unloading and loading of the vehicle. Through the addition of the door-closed sensor, the tilting motion of the vehicle is prevented even when the engine is running and no other locking signal has been previously provided to the locking mechanism. The tilting motion may be unlocked again once the door-closed sensor registers that the door is closed, and no further locking events are ongoing, such as for example the vehicle being parked and/or not having the engine running. As an additional safety feature, the controller may be adapted to prevent the propulsion drive from rotating the drive wheels or limit the speed at which the drive wheels can be rotated to a minimum when the door-closed sensor registers an open door.

According to another aspect of the invention, the controller is with an input connected to a contact-sensor for sensing if the vehicle is being turned off or on and wherein the controller is adapted for generating the locking signal when the vehicle is being turned off. By locking the front frame section of the vehicle with respect to the rear frame section when the vehicle is being turned off, any tilting motion of the vehicle while for example being parked is being prevented. As a result, the vehicle is a fully rigid object with the contact off, making it a predictable and safe object to leave unattended. For example, when a person would lean against the vehicle for support, the front frame section does not give way, resulting in the person unexpectedly not being provided with the support and falling. As a result, the vehicle can safely be parked in close vicinity to other objects, without the risk of the vehicle causing damage to these other objects due to unexpected tilting.

According to a further aspect of the invention, the non-tiltable position of the front frame section is substantially vertically upright. Thus, the vehicle will be mostly upright when parked and/or having one or more doors open, allowing easy entering and exiting of the vehicle. Furthermore, even when parked on an uneven surface, the front frame section will be substantially upright, resulting in the centre of gravity of the vehicle leaning against the slope of the uneven surface, thereby reducing the risk of the vehicle falling over due to the presence of the uneven surface. For determining the vertical upright position, regardless of the state of the ground surface onto which the vehicle is resting, the vehicle may be provided with one or more gyroscopes.

According to a preferred embodiment, the electric motor comprises a housing with a motor member, a transmission gear connected to the drive gear, the locking mechanism comprising a resilient brake member situated in the housing, which blocks rotation of the drive gear when no electrical power is supplied to the motor member, and wherein a locking signal causes the electrical power supply to the motor member being stopped. The transmission gear allows the electric motor to operate the drive gear at optimum power usage. Through the addition of the brake member, the tilting of the vehicle is lockable by locking the position of the drive gear along the toothed surface of the tilting member. As a result, the tilting of the vehicle may be reliably locked without requiring a separate locking mechanism. Thus, no further components are required which would need separate controlling and servicing, thereby saving on additional component costs and allowing the vehicle to maintain a relatively low weight and compact design.

### Short description of drawings

Embodiments of a tilting vehicle according to the present invention will be described by way of example, with reference to the attached drawings, in which
Fig. 1 shows a perspective view of a tilting vehicle in a tilted position.
Fig. 2 shows a perspective view of structure of the tilting vehicle according to Fig. 1 without body panels and in an upright position.
Fig. 3 shows a longitudinal cross-section of the tilting vehicle of Fig. 1.
Fig. 4 shows a top view of the tilting system components of the tilting vehicle of Fig. 1.
Figs. 5 and 6 show in more detail the tilting mechanism as used in the vehicle according to
Fig. 7 shows a schematic overview of the control system for controlling the tilting vehicle of Fig. 1.

### Description of embodiments

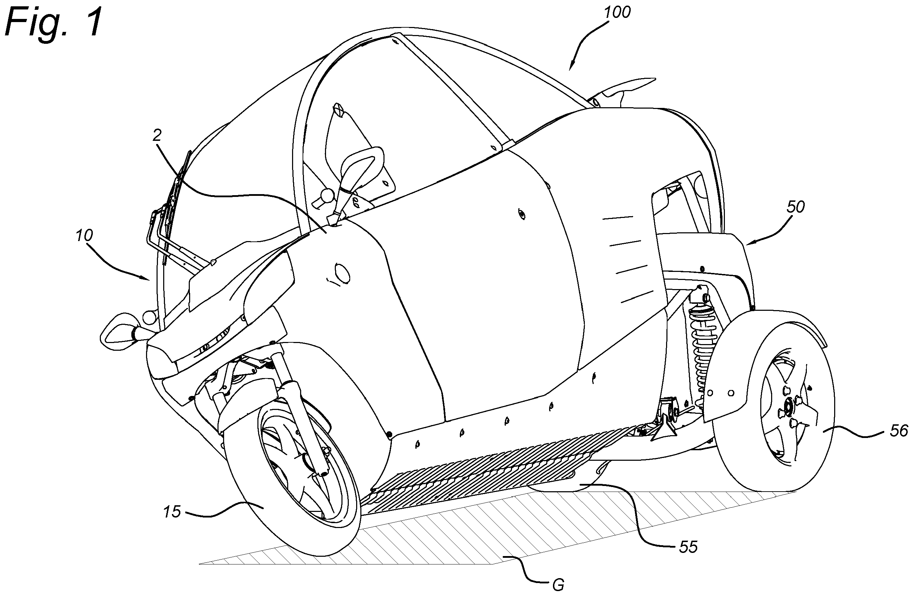

Fig. 1 shows a perspective view of a tilting vehicle 100 in a tilted position. The tilting vehicle 100 comprises a front frame section 10 with a front wheel 15 and body panels comprising a side panel 2 and a rear frame section 50 with two drive wheels 55,56. The front fame section 10 is connected to the rear frame section 50 in such a manner that the frame sections are tiltable with respect to each other. When a ground plane G onto which the tilting vehicle 100 is positioned is substantially flat, generally the front frame section will be tilting with respect to the rear frame section, offering a driving experience similar to that of driving a motorbike, when driving through bends.

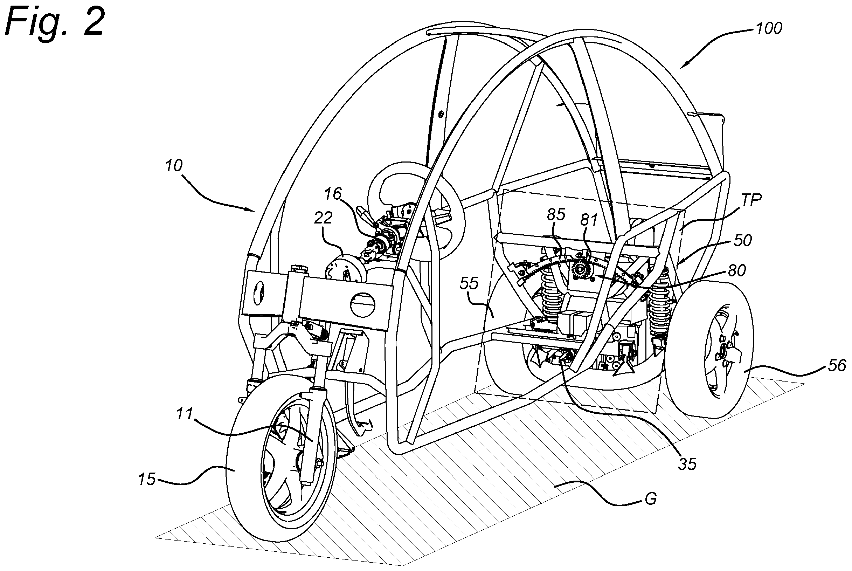

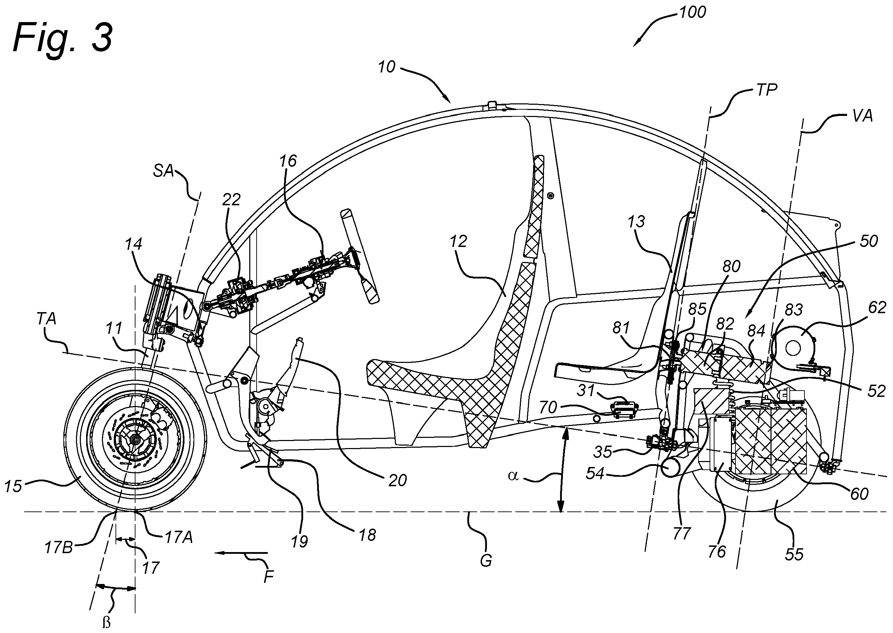

Fig. 2 shows a perspective view of structure of the tilting vehicle 100 according to Fig. 1 without body panels and in an upright position. The connection between the front and rear frame sections is shown to comprise a hinge 35 and a tilting mechanism, having a rack 85 and pinion drive 80 wherein the pinion 81 of the pinion drive is movable along a curved and toothed lower surface of the rack 85. The tilting mechanism allows controlled tilting of the front frame section with respect to the rear frame section along the entire toothed surface of the rack 85. As a result, the front frame section 10 is moveable between a first extreme tilted position in which the front frame section 10 is tilted around a longitudinal tilting axis TA (see Fig. 3) towards the side of the first drive wheel 55 and a second extreme tilted position in which the front frame section 10 is tilted towards the side of the second drive wheel 56.

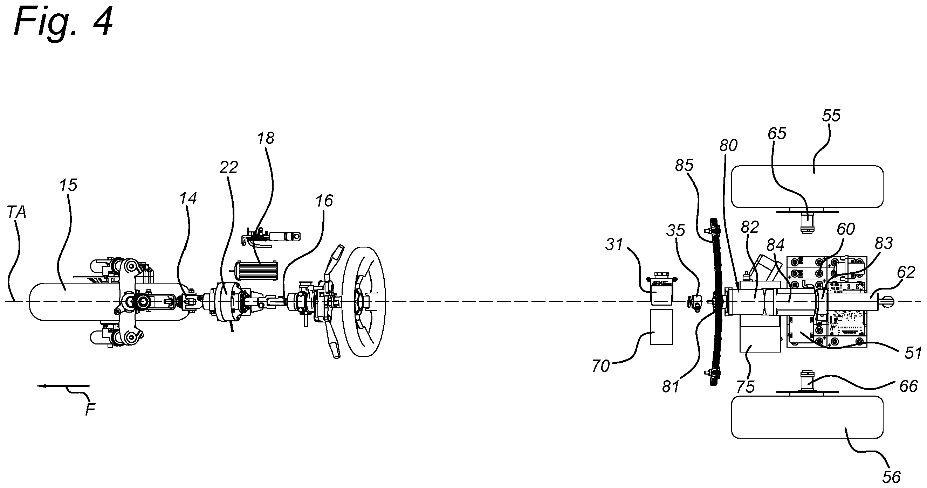

Figs. 3 and 4 respectively show a longitudinal cross-section and a top view of the tilting vehicle 100 of Fig. 1. Figs. 3 and 4 show the front frame section 10 with the one steering front wheel 15 mounted on a front fork 11, a driver seat 12, a passenger seat 13, a steering member or handle bar 16, the curved tilting rack 85, a set of sensors 22, a front frame G-sensor and gyroscope 31 and a controller 70, as well as an acceleration pedal 18, a brake pedal 19 and a drive and reverse selection member 20, for selecting a driving direction of the vehicle. The listed components are set up in a regular driving arrangement, allowing a driver in the driver seat 12 to operate the acceleration pedal 18, brake pedal 19 , drive and reverse selection member 20 and handle bar 16, which are located within normal reaching distance in front of the driver seat. The passenger seat 13 is shown to be located directly behind the driver seat 12. This set-up allows the front frame section design to remain as narrow and sleek as possible, contributing to better aerodynamics and handling properties and reduces the vehicle's footprint. Alternatively, however, the seats may be positioned side by side, or only a driver seat 12 may be present.

The front wheel 15 is attached to the front frame section 10 via the front fork 11 which is rotatable about a steering axis SA located in the vertical plane, substantially perpendicular to the tilt axis TA. The front fork 11 is angled such that the axis reaches the ground at point 17B, which is located in front of the contact point 17A of the wheel with the ground. The caster angle β between the steering axis SA and a vertical axis through the contact point 17A of the wheel with the ground is about 7-8°. This results in a positive caster and generates a moment around the steering axis SA that will bring the front wheel 15 back to a straight-ahead equilibrium position. The trail 17, the distance along the ground surface G between the contact point 17A and the point 17B at which the steering axis SA reaches the ground, provides the degree of self-centring for the steering. By designing the front frame section such that the front fork 11 is at a caster angle it provides a positive caster and generates a moment around the steering axis SA that will bring the front wheel back to a straight-ahead equilibrium position. Thus, the vehicle is easier to control and has improved directional stability.

The front fork 11 is mechanically connected to the handle bar 16 through a linkage 14, allowing a driver of the vehicle to rotate the front wheel in a desired driving direction. This linkage 14 is constructed as a transmission with steering rods. Alternatively, the linkage can be a direct coupling, as for example the case of a conventional motor bicycle, or consist of control cables or an hydraulic or electrical actuator. Furthermore, it will be obvious that other steering means may be implemented in addition to or instead of the aforementioned options, in order to provide the vehicle with an auto-pilot function or to provide an autonomous vehicle using the same inventive concept. The sensors 22 are shown as being attached to the handle bar 16. The sensors 22 comprise a steering force sensor and a steering angle sensor, which are coupled to the steering shaft of the front wheel in such a way that the sensors register the steer force exerted by the driver via the handle bar 16 and the wheel caster, the sensor also measures the steering angle. An integrated steering angle and steering force sensor is a product available in the industry.

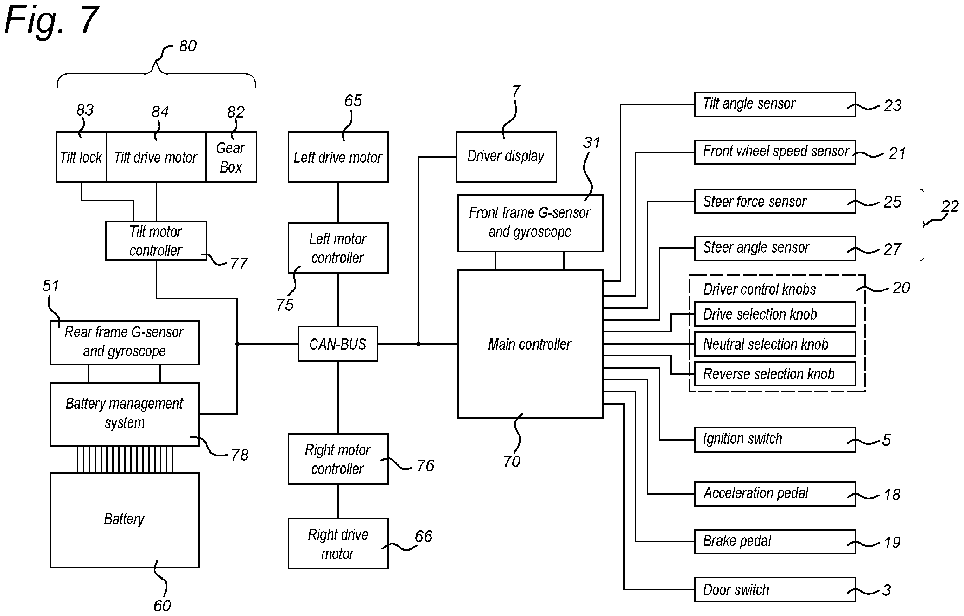

Additionally, a reversing sensor and a speed sensor are positioned in the front wheel 15 (not shown). The G-sensor and gyroscope 31 are positioned at the bottom of the tilting frame, near the controller 70. All measurements are transferred to a controller 70 located under the passenger seat 13 of the front frame section 10. The sensors are discussed in more detail in reference to Fig. 7.

The rear frame section 50 comprising the drive wheels 55,56 is shown to further comprise a rear axle suspension body 54 for connecting the drive wheels to the rear frame section, and shock absorbers 52, as well as a main drive battery 60, a battery management system 78, a battery charger 62, electric drive motors 65, 66, the tilt drive 80 and a rear frame G-sensor and gyroscope 51. The shock absorbers 52 are connected between the rear frame and the rear axle suspension body 54 at the location where the drive wheels 55, 56 are attached. The drive wheels are each equipped with independent electric hub motors 65, 66, and independently connected to the battery 60 located in the rear frame section 50, via the battery management system 78, for electric power. Further, both hub motors 65, 66 are in communication with the controller 70 such that the drive wheels can be driven independently, allowing a difference in torque being generated between the drive wheels 55, 56 of the vehicle. In this set-up the controller 70 is arranged to control the electric motors 65,66 individually, allowing them to be run at different velocities, torques and/or directions from each other. Additionally, the controller 70 is arranged to redirect any regenerated electricity resulting from a braking action on one wheel to the other electric motor of the other wheel that is run at a higher speed or torque.

The front frame section 10 is connected to the rear frame section 50 via a hinge 35 defining the rotation point around which the front frame section can be tilted. The distance between the hinge 35 and the pinion 81 defines the tilting moment arm. The tilting axis TA defines a longitudinal centerline of the tilting vehicle around which the wheels 15, 55, 56 are symmetrically spaced and which axis is at an angle α with respect to a ground plane G onto which all three wheels of the vehicle are resting such that the tilting axis is sloped downwards in the direction of the rear of the vehicle. The angle α of the tilting axis is about 7 - 8 degrees. The tilting rack 85 and tilt drive 80 are engaged at some distance above the hinge 35 seen in the tilting plane TP, for controlling the tilting motion of the front frame section 10 along the curvature of the tilting rack 85. Hereto the tilting drive 80 comprises the pinion 81, an electromotor 84, a gear box 82 and a tilt lock 83, which can be electrically disengaged.

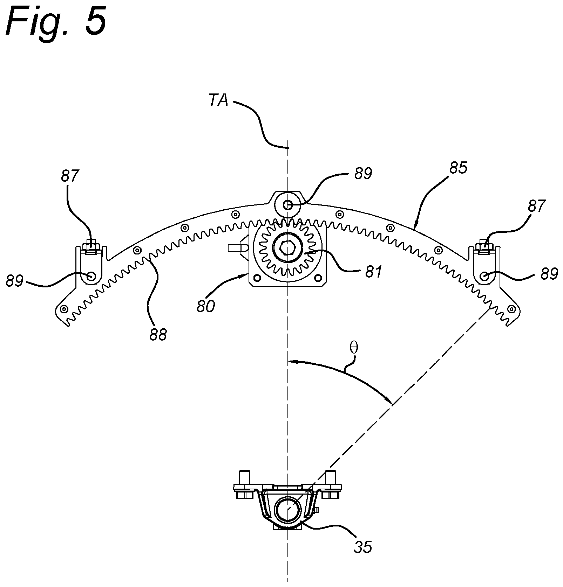

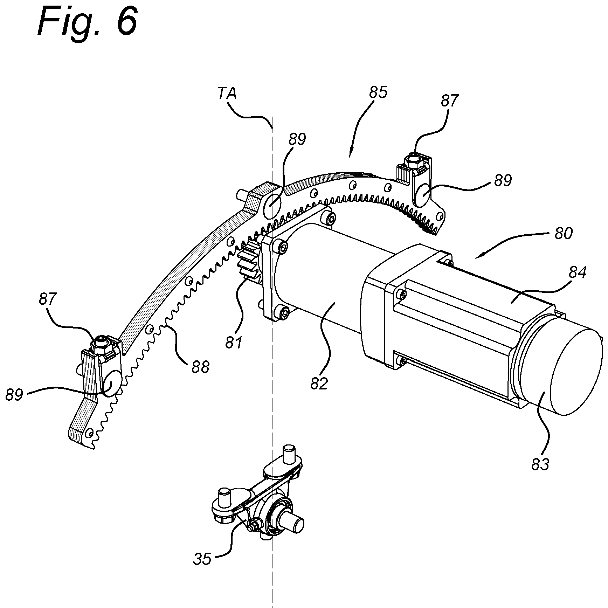

The tilting member or rack 85 is described further for Figs. 5 and 6, which show the tilting mechanism in more detail. The tilting mechanism is shown to comprise the tilting member 85 and the tilting drive 80. The tilting member 85 is a curved rack, with a toothed surface 88 on the inside of the curve and comprises attachment bolts 89, and an adjustment mechanism 87. The tilting drive 80 is shown as comprising the pinion 81, the electromotor 84, the gear box 82 and the tilt lock 83. The electromotor 84 is connected to the pinion 81 via the gear box, which gear box 84 is set up to translate a high rotation of the electromotor 84 to a high torque of the pinion 81. The gear box transmission is about 1:24. The rack 85 is connected to the front frame section 10 (not shown here) via attachment bolts 89, which are located at both ends and in the centre of the tilting member. When attached, the tilting member 85 is situated such that the rotational center of the partially circular frame coincides with the hinge connection 35 of the front and rear frame sections 10, 50, such that the plane of symmetry of the tilting member 85 is perpendicular to the tilting axis TA. Additionally, the adjustment mechanism 87 is arranged between the ends of the tilting member and the frame (not shown), for controlling an offset from an initial mounting position of the rack 85 with respect to the frame 50 in the tilting plane TP.

The adjustment mechanism 87 has adjusting screws at both ends of the rack 85, which allow easy manual adjustment as required. When the rear frame section 50 is connected to the front frame section 10 at the hinge connection 35 previously discussed in relation to Figs. 3 and 4, the pinion 81 of the tilting drive 80 should accurately engage with the toothed surface 88 such that the pinion 81 can rotate along the entire toothed surface 88 smoothly. This smooth interaction is achieved by adjusting the position of the rack 85 with respect to the front frame section 10 to which it is connected, whereby a distance between either end of the tilting member 85 and the hinge connection 35. During the operational life of the vehicle 100, the toothed surface 88 and pinion 81 will experience wear and tear, which can be compensated by intermitted adjustments of the position of the rack 85 prolonging the lifetime for both components. When worn out, the rack 85 can easily be removed and replaced through the bolted attachments 87 to the frame.

The electromotor 84 of the tilting drive 80 is controlled by a motor controller mounted in the rear frame and is also connected to the battery 60 for electric power. In the vehicle 100 as depicted in the previous Figures, the amperage and voltage to the electromotor 84 are controlled by the tilt motor controller as imposed by the main controller 70. Thus the main controller 70 ultimately controls the activation of the tilting motion between the front frame section 10 and the rear frame section 50. The tilt lock 83 mechanically locks the tilting angle θ of the front frame section 10 with respect to the rear frame section 50 when the vehicle is in a parking position and no power is supplied.

When the electrical power is switched on, thus when the vehicle 100 is in use, the tilting drive 80 is mainly controlled depending on input provided to the main controller 70 by the tilt angle sensor 23, the gyroscope and G-sensors 51, 31 in respectively the front frame section 10 and the gyroscope and G-sensor 51 in the rear frame section 50 in order to keep the vehicle upright. Upon switching on the vehicle. the tilt lock 83 is electrically disengaged so the front frame section 10 can tilt actively. If the rear frame section 50 of the vehicle is not fully horizontal while no steering input is provided detected by the tilt angle sensor 23, the front frame section 10 of the vehicle 100 will be put in the upright position. When driving on an angled road surface or with one wheel on the curb, a measurement input to the main control 70 unit from the tilt angle sensor and/or the gyroscope and G-sensors 31, 51 detects the inclined position of the rear frame section 50. The main controller 70 now causes the tilting drive 80 to rotate such that the front frame section 10 tilts upright.

To ensure that the front frame section 10 even remains stably upright while driving over uneven surfaces, the controller 70 controlling the tilting drive 80 based on driver steering input is adapted to allow the pinion 81 to move freely along the toothed surface 88 of the rack 85 around a neutral position so that the front frame section is substantially vertical when no steering input is provided. Thus, when no steering input is provided to the tilting drive 80, the pinion 81 is positioned along the toothed surface 88 of the tilting member 85 such that the front frame section 10 of the vehicle 100 is in a substantially vertical upright position, which defines the neutral position along the toothed surface 88 . In the neutral position only a low torque acts on the pinion 81, allowing the gear 81 of the tilting drive 80 to freely move along the toothed surface 88 around this neutral position. As a result no shocks are transmitted to the gear 81 and toothed surface 88, reducing in the wear of both elements, which therefore can be of relatively light-weight construction. Additionally, driver comfort is ensured as little to no forces acting on the rear frame section 50 due to ground surface G unevenness are being transmitted to the handle bar 16 or cause substantial additional tilting of the front frame section 10 of the vehicle with respect to the vertical position.

When a steering input is provided which results in the vehicle 100 tilting, the pinion 81 is operated at a high torque. The relation between the sensors, controller 70, battery and drive and tilt motors 65,66,80 is further described for Fig. 7.

Fig. 7 shows a schematic overview of the control system for controlling the tilting vehicle of Fig. 1. The schematic shows a speed sensor 21, a tilt angle sensor 23, a steering force sensor 25, a steering angle sensor 27, driver selection knobs 20, an ignition switch 5, the acceleration pedal 18, the brake pedal 19, a door switch 3, the front frame G-sensor and gyroscope 31, the rear frame G-sensor and gyroscope 51, the main controller 70, the battery management system 78, the battery 60, the electric drive motors 65, 66, motor controllers 75, 76 the tilting drive 80, with tilt lock 83, the tilt drive motor 84 and gear box 82 and a tilt motor controller 77. All signals from all sensors are conducted via electric wires to an input side of the main controller 70. At an output side of the main controller 70, the electromotor 84 of the tilting drive 80 and motors 65, 66 are also connected via electric wires, for receiving control signals from the controller 70 and for providing information to the controller 70, such as motor rotation speed, motor position, motor amperage, motor voltage and motor temperature. Further, the tilt motor 80 and two wheel hub motors 65, 66 are each individually connected to the battery 60, via the battery management system 78. Through these individual connections, an exact power distribution can be achieved, which ultimately leads to energy savings.

As described in relation to Figs. 4-6, when the power of the tilting vehicle 100 is off, the tilt lock 83 is activated. Thus, the tilt lock 83 is on when the ignition switch 5 is in the off position. The controller 70 is pre-programmed to provide a locking signal to the tilt lock 83 when it registers the ignition switch 5 being switched from the on to the off position. The locking signal initiated by the off switching of the ignition switch 5 is undone when the ignition switch 5 is switched on again.

A further locking signal is generated from the controller 70 when the door switch 3 registers an open door of the vehicle, ensuring the vehicle is in a stable and safe position during loading and offloading. Furthermore, when the door switch 3 registers an open door, the controller 70 is pre-programmed to prevent the vehicle 100 from starting the drive motors 65,66. The tilting lock 83 and driving blockage are disengaged when the door switch 3 registers that the/all doors are closed. Additionally, the controller 70 may be pre-programmed with additional safety features, which, for instance, allow the vehicle to remain operable in a limited range if a door is opened while the vehicle is moving.

When during driving the driver desires to change direction, and therefore exerts a moment on the handle bar 16, this moment will be monitored by the steering force sensor 25. Depending on the speed of the vehicle, as measured by the speed sensor 21, the controller 70 will determine a required tilting angle and moment required on the rear frame section 10 for balanced driving through a bend and a corresponding required individual torque for each of the drive wheels 55, 56. In addition to controlling the tilting drive 80, the controller 70 forwards signals to the wheel hub motors 65, 66 such that the a difference in torque between the wheels 55,56 generates the required moment. In doing so, one wheel hub motor is run at a higher torque than the other wheel hub motor, wherein the higher amount required by this one motor can be routed directly from the battery 60 or in the situation where the other wheel 56 is slowed down for achieving said torque difference, energy may be regenerated from the braking action which can directly be fed into the other wheel hub motor, thereby saving energy from the battery 60. Through this combination of a differential torque generating means, the steer force sensor 25, the speed sensor 21, and the tilting elements it is possible to achieve a prompt and direct balancing action at all speeds and in particular also at high speeds.

When the driver puts the vehicle into drive and operates the accelerator pedal 18, both wheel hub motors 65,66 will give the same amount of positive/forward torque such that the vehicle starts to accelerate similar to known electric vehicles. However, the controller 70 of this tilting vehicle 100 is arranged such that, when the vehicle is driving at a constant very slow speed, no acceleration torque is applied on the rear wheels 55,56 whereby the controller 70 controls the wheel hub motor controls 75, 76 such that when steering the vehicle the torque on the inner wheel is negative, resulting in a relative backwards turning wheel, and the torque on the outer wheel is positive, while substantially no tilting motion occurs. As a result, inward pointing torque is generated on the vehicle 100 in the form of a positive moment around a substantially vertical axis VA of the rear frame, allowing the vehicle being driven around relatively narrow corners without requiring the tilting motion, making the vehicle easy to operate in dense (slow) traffic areas. A very slow speed is any speed below a low speed threshold of for example 3 km/h. At increasing velocity, less positive torque is required from the drive wheels 55,56 to maintain good maneuverability of the vehicle, as the vehicle will start tilting, which tilting motion supports the ease with which the vehicle can drive through bends. Therefore, the controller 70 is arranged to control the generated torque difference between the wheel hub motors 65,66 in dependency of the velocity of the vehicle. When at low speeds, higher than the low speed threshold, a steer force is detected by the steering force sensor 25 for turning into a bend, a relatively small tilting motion is set in action by the controller 70, while a torque on the inner wheel hub motor is reduced and a torque on the outer wheel hub motor is increased. With increasing speed, the tilting motion becomes larger, while the torque difference between the inner wheel hub motor and the outer wheel hub motor is decreased. At higher speeds, such as above 50 km/h, the gyroscopic effect of the front wheel resists tilting of the front frame section. By exerting a counter-moment on the rear frame section using the drive wheels, the moment that is required for tilting of the front frame section is reduced. In this way the driver is assisted in driving into the curve at high speed and tilting can be achieved with the light-construction tilting drive 80 and member 85.

The present invention has been described above with reference to a number of exemplary embodiments as shown in the drawings. Modifications and alternative implementations of some parts or elements are possible and are included in the scope of protection as defined in the appended claims. For example, the front frame and rear frame sections could easily be supplied with additional wheels whilst maintaining the functionality of the tilting vehicle as described for the exemplary embodiments as shown in the drawings.

## Claims

1. Tilting vehicle (100) comprising a rear frame section (50) having two drive wheels (55,56) and a front frame section (10) having at least one front wheel (15), connected to the rear frame section (50) such as to be tiltable about a tilt axis (TA) that extends in a length direction, the front frame section (10) carrying a driver seat (12), the rear frame section (50) comprising a propulsion drive for rotating the drive wheels (55,56) and a tilting drive (80) for tilting the front section about the tilting axis (TA), the front wheel (15) being tiltable about a steering axis (SA) that extends transversely to the tilt axis (TA), the vehicle further comprises a locking mechanism for locking the front frame section (50) in a non-tiltable position to the rear frame section (10), and a controller (70) being with an input arranged for receiving a lock-command signal and being with an output connected to the locking mechanism for generating a locking signal for actuating the locking mechanism, wherein the lock-command signal comprises a user-generated signal and/or a status signal provided by a sensor **characterized in that** the tilting drive (80) comprises an electric motor situated at a predetermined distance from the tilt axis (TA) with a gear (81), and a tilting member (85) having a toothed surface (88) engaging with the gear (81) such that the tilting member (85) can be displaced transversely to the tilting axis by rotation of the gear, whereby the tilting drive (80) and the tilting member (85) are connected to the respective front and rear frame sections (10, 50), and wherein the locking element is comprised in the tilting drive (80).

2. Tilting vehicle (100) according to claim 1, wherein the vehicle is self-balancing

3. The tilting vehicle (100) according to claim 1 or 2, wherein the front frame section (50) comprises at least one door for allowing access to the driver seat (12) and a door-closed sensor for registering if a door is open, wherein the controller (70) has an input connected to said door-closed sensor and is adapted for generating the locking signal when the door-closed sensor registers an open-door.

4. The tilting vehicle (100) according to any one of the preceding claims, wherein the controller (70) is with an input connected to a contact-sensor for sensing if the vehicle is being turned off or on and wherein the controller (70) is adapted for generating the locking signal when the vehicle is being turned off.

5. The tilting vehicle (100) according to any one of the previous claims, wherein the non-tiltable position of the front frame section (50) is vertically upright.

6. The tilting vehicle according to claim 1, wherein the electric motor comprises a housing with a motor member (84), a transmission gear (82) connected to the drive gear (81), the locking mechanism comprising a resilient brake member (83) situated in the housing, which blocks rotation of the drive gear (81) when no electrical power is supplied to the motor member (84), and wherein a locking signal causes the electrical power supply to the motor member being stopped.

## Patentansprüche

1. Kippfahrzeug (100), der einen hinteren Rahmenabschnitt (50) mit zwei Antriebsrädern (55, 56) und einen vorderen Rahmenabschnitt (10) mit mindestens einem Vorderrad (15), der um eine in Längsrichtung verlaufende Kippachse (TA) kippbar mit dem hinteren Rahmenabschnitt (50) verbunden ist, umfasst, wobei der vordere Rahmenabschnitt (10) einen Fahrersitz (12) trägt, der hintere Rahmenabschnitt (50) einen Vortriebsantrieb zum Drehen der Antriebsräder (55,56) und einen Kippantrieb (80) zum Kippen des vorderen Abschnitts um die Kippachse (TA), umfasst, wobei das Vorderrad (15) um eine Lenkachse (SA) kippbar ist, die quer zur Kippachse (TA) verläuft, wobei das Fahrzeug ferner einen Verriegelungsmechanismus zum Verriegeln des vorderen Rahmenabschnitts (50) in einer nicht kippbaren Position zum hinteren Rahmenabschnitt (10), umfasst, und wobei eine Steuerung (70) über einen Eingang zum Empfangen eines Verriegelungsbefehlssignals und über einen Ausgang, der mit dem Verriegelungsmechanismus verbunden ist, verfügt, um ein Verriegelungssignal zum Betätigen des Verriegelungsmechanismus zu erzeugen, wobei das Verriegelungsbefehlssignal ein vom Benutzer erzeugtes Signal und/oder ein von einem Sensor bereitgestelltes Statussignal umfasst, **dadurch gekennzeichnet, dass** der Kippantrieb (80) einen in einem vorbestimmten Abstand von der Kippachse (TA) angeordneten Elektromotor mit Getriebe (81) und ein Kippelement (85) mit einer gezahnten Oberfläche (88) umfasst, die mit dem Getriebe (81) so in Eingriff steht, dass das Kippelement (85) durch Drehung des Getriebes quer zur Kippachse verschoben werden kann, wobei der Kippantrieb (80) und das Kippelement (85) mit dem jeweiligen vorderen und hinteren Rahmenabschnitt (10, 50) verbunden sind und wobei das Verriegelungselement im Kippantrieb (80) enthalten ist.

2. Kippfahrzeug (100) nach Anspruch 1, wobei das Fahrzeug selbstbalancierend ist.

3. Kippfahrzeug (100) nach Anspruch 1 oder 2, wobei der vordere Rahmenabschnitt (50) mindestens eine Tür zum Ermöglichen des Zugangs zum Fahrersitz (12) und einen Tür-geschlossen Sensor zum Registrieren, ob eine Tür geöffnet ist, umfasst, wobei die Steuerung (70) über einen Eingang verfügt, der mit dem Tür-geschlossen Sensor verbunden ist, und so angepasst ist, dass sie das Verriegelungssignal erzeugt, wenn der Tür-geschlossen Sensor eine offene Tür registriert.

4. Kippfahrzeug (100) nach einem der vorhergehenden Ansprüche, wobei die Steuerung (70) über einen Eingang mit einem Kontaktsensor verbunden ist, um zu erfassen, ob das Fahrzeug ein- oder ausgeschaltet wird, und wobei die Steuerung (70) so angepasst ist, dass sie ein Verriegelungssignal beim Abstellen des Fahrzeugs erzeugt.

5. Kippfahrzeug (100) nach einem der vorhergehenden Ansprüche, wobei die nicht kippbare Position des vorderen Rahmenabschnitts (50) vertikal aufrecht ist.

6. Kippfahrzeug nach Anspruch 1, wobei der Elektromotor ein Gehäuse mit einem Motorelement (84), ein mit dem Antriebsgetriebe (81) verbundenes Übertragungsgetriebe (82) umfasst, wobei der Verriegelungsmechanismus ein im Gehäuse befindliches elastisches Bremselement (83) umfasst, das die Drehung des Antriebsgetriebes (81) blockiert, wenn dem Motorelement (84) keine elektrische Energie zugeführt wird, und wobei ein Verriegelungssignal bewirkt, dass die elektrische Energiezufuhr zum Motorelement gestoppt wird.

## Revendications

1. Véhicule inclinable (100) comprenant une section de châssis arrière (50) ayant deux roues motrices (55,56) et une section de châssis avant (10) ayant au moins une roue avant (15), connecté à la section de châssis arrière (50) de manière à être inclinable autour d'un axe d'inclinaison (TA) qui s'étend dans une direction longitudinale, la section de châssis avant (10) portant un siège de conducteur (12), la section de châssis arrière (50) comprenant un entraînement de propulsion pour tourner les roues motrices (55,56) et un entraînement basculant (80) pour incliner la section avant autour de l'axe d'inclinaison (TA), la roue avant (15) étant inclinable autour d'un axe de direction (SA) qui s'étend transversalement par rapport à l'axe d'inclinaison (TA), le véhicule comprend en outre un mécanisme de verrouillage pour fermer la section de châssis avant (50) dans une position non-basculante à la section de châssis arrière (10), et un contrôleur (70) ayant une entrée disposée pour recevoir un signal de commande de serrure et ayant une sortie connectée au mécanisme de verrouillage pour générer un signal de verrouillage pour actionner le mécanisme de verrouillage, où le signal de commande de verrouillage comprend un signal généré par un utilisateur et/ou un signal d'état fourni par un capteur **caractérisé en ce que** l'entraînement basculant (80) comprend un moteur électrique situé à une distance prédéterminée de l'axe d'inclinaison (TA) avec un engrenage (81), et un élément basculant (85) ayant une surface dentée (88) s'engageant avec l'engrenage (81) de sorte que l'élément basculant (85) peut être déplacé transversalement par rapport à l'axe d'inclinaison par rotation de l'engrenage, de sorte que l'entraînement basculant (80) et l'élément basculant (85) sont connectés aux sections respectives de châssis avant et arrière (10, 50), et où l'élément de verrouillage est compris dans l'entraînement basculant (80).

2. Véhicule inclinable (100) selon la revendication 1, où le véhicule est autoéquilibré.

3. Véhicule inclinable (100) selon la revendication 1 ou 2, où la section de châssis avant (50) comprend au moins une porte pour permettre un accès au siège du conducteur (12) et un capteur de fermeture de porte pour enregistrer si une porte est ouverte, où le contrôleur (70) a une entrée connectée audit capteur de fermeture de porte et est adapté pour générer le signal de verrouillage lorsque le capteur de fermeture de porte enregistre une porte ouverte.

4. Véhicule inclinable (100) selon l'une quelconque des revendications précédentes, où le contrôleur (70) a une entrée connectée à un capteur de contact pour détecter si le véhicule est activé ou désactivé et où le contrôleur (70) est adapté pour générer le signal de verrouillage lorsque le véhicule est désactivé.

5. Véhicule inclinable (100) selon l'une quelconque des revendications précédentes, où la position non-inclinable de la section de châssis avant (50) est à la verticale.

6. Véhicule inclinable selon la revendication 1, où le moteur électrique comprend un logement avec un élément de moteur (84), un engrenage de transmission (82) connecté à l'engrenage d'entraînement (81), le mécanisme de verrouillage comprenant un élément de frein élastique (83) situé dans le logement, qui bloque la rotation de l'engrenage d'entraînement (81) lorsqu'aucune alimentation électrique n'est fournie à l'élément moteur (84), et où un signal de verrouillage provoque l'arrêt de l'alimentation électrique de l'élément moteur.
